# DEMANDE DE BREVET EUROPEEN

(11) **EP 0 743 466 A1**
(43) Date de publication de la demande: **20.11.1996**
(21) Numéro de dépôt: 96400898.1
(22) Date de dépôt: 26.04.1996
(51) Int. Cl.: F16D 23/06

(54) **Dispositif de synchronisation pour boîte de vitesses mécanique**

(30) Priorité: 28.04.1995 FR 9505128
(71) Demandeur: Société Anonyme dite: REGIE NATIONALE DES USINES RENAULT, 92109 Boulogne Billancourt (FR)
(72) Inventeur: Valentin, Daniel, 92500 Rueil Malmaison (FR)

(57) **Abrégé**

Dispositif de synchronisation comportant un moyeu (1) solidaire d'un arbre rotatif (2) de boîte de vitesses, et un baladeur (8) pouvant coulisser axialement sur le moyeu (1), en vue de déplacer l'un ou l'autre de deux anneaux de synchronisation (6a, 6b) contre un pignon de vitesses (7a, 7b) libre en rotation autour de l'arbre (2), par l'intermédiaire de barrettes (9) repoussées radialement vers le baladeur (8) au moyen d'une paire de joncs élastiques (11a, 11b) disposées entre les anneaux (6a, 6b) et les barrettes (9), caractérisé en ce que les barrettes (9) présentent sur leur face intérieure deux rampes inclinées symétriques (17a, 17b) orientées de façon telle que le déplacement d'un premier anneau (6a, 6b) par les barrettes (9) en direction d'un pignon (7a, 7b), s'accompagne du rappel axial du second anneau (6a, 6b) en direction du moyeu (1), grâce à la compression radiale du jonc (11a, 11b) disposé autour du second anneau (6a, 6b).

## Description

La présente invention est relative à un dispositif de synchronisation, ou synchroniseur, pour boîte de vitesses mécanique, notamment de véhicule routier.

Les synchroniseurs de boîtes de vitesses mécaniques sont constitués essentiellement d'un moyeu fixé sur un arbre rotatif de la boîte, d'un baladeur solidaire en rotation du moyeu, mais déplaçable en translation le long de celui-ci sous la commande d'une fourchette reliée au levier de changement de vitesses du véhicule, et d'anneaux de synchronisation déplacés par le baladeur en direction de pignons de vitesse tournant librement autour de l'arbre rotatif.

De façon habituelle, le baladeur vient en prise par sa denture d'accouplement avec celle d'un pignon, après avoir rencontré et traversé la denture d'un anneau de synchronisation, lorsque tout glissement a disparu entre l'anneau et le pignon. Selon une disposition classique, illustrée notamment par la publication FR 1.182.512, le baladeur peut être monté autour de moyeu sur des clavettes, déplacées par le baladeur le long du moyeu pour pousser l'anneau de synchronisation contre un pignon.

Les clavettes ne sont cependant pas indispensables, et selon une autre disposition connue, le baladeur monté directement sur la denture extérieure du moyeu, pousse l'anneau de synchronisation par l'intermédiaire d'une bague élastique. La publication FR 2.390.633, au nom de la demanderesse, décrit à ce sujet une bague élastique munie de protubérances radiales engagées dans une gorge circulaire du baladeur, de façon à déplacer l'anneau en direction d'un pignon sous l'action du baladeur, puis à s'effacer vis-à-vis de ce dernier, lorsque la synchronisation est réalisée.

De façon générale, l'anneau doit disposer autour du pignon, d'un jeu suffisant pour garantir sa liberté de rotation vis à vis de celui-ci, lorsqu'il n'est pas sollicité par le baladeur. Ce jeu est cependant à l'origine de couples de frottement importants, au sein d'une boîte de vitesses. Le "couple de traînée" résultant de ces frottements, est ressenti par l'utilisateur comme une résistance du mécanisme, augmentant l'effort qu'il doit exercer sur son levier de changement de vitesses.

La présente invention a pour but d'augmenter le confort d'utilisation d'un mécanisme de changement de vitesses, en supprimant le "couple de traînée" généré habituellement par les synchroniseurs dans un tel mécanisme.

Elle concerne un dispositif de synchronisation comportant un moyeu solidaire d'un arbre rotatif de boîte de vitesses, et un baladeur pouvant coulisser axialement sur le moyeu en vue de déplacer l'un ou l'autre de deux anneaux de synchronisation contre un pignon de vitesses libre en rotation autour de l'arbre, par l'intermédiaire de barrettes repoussées radialement vers le baladeur au moyen d'une paire de joncs élastiques entourant les anneaux. Ce dispositif est caractérisé en ce que les barrettes présentent sur leur face intérieure deux rampes inclinées symétriques orientées de façon telle que le déplacement d'un premier anneau par les barrettes en direction d'un pignon s'accompagne du rappel axial du second anneau en direction du moyeu, grâce à la compression radiale du jonc disposé autour du second anneau.

Le déplacement des anneaux en direction du moyeu est limité par des pattes prévues sur sa périphérie.

De façon préférentielle, les jonc élastiques peuvent être immobilisés axialement vis-à-vis des anneaux, à l'intérieur d'une rainure circulaire ménagée dans les pattes de ces anneaux.

D'autres caractéristiques et avantages de l'invention apparaîtront clairement à la lecture de la description suivante d'un mode de réalisation particulier de celle-ci, en liaison avec les dessins annexés sur lesquels :
- la figure 1 est une coupe longitudinale du dispositif proposé,
- la figure 2 est un agrandissement en perspective d'une barrette de ce dispositif, et
- les figures 3A et 3B sont respectivement une vue de face et une coupe longitudinale des anneaux de synchronisation proposés par l'invention.

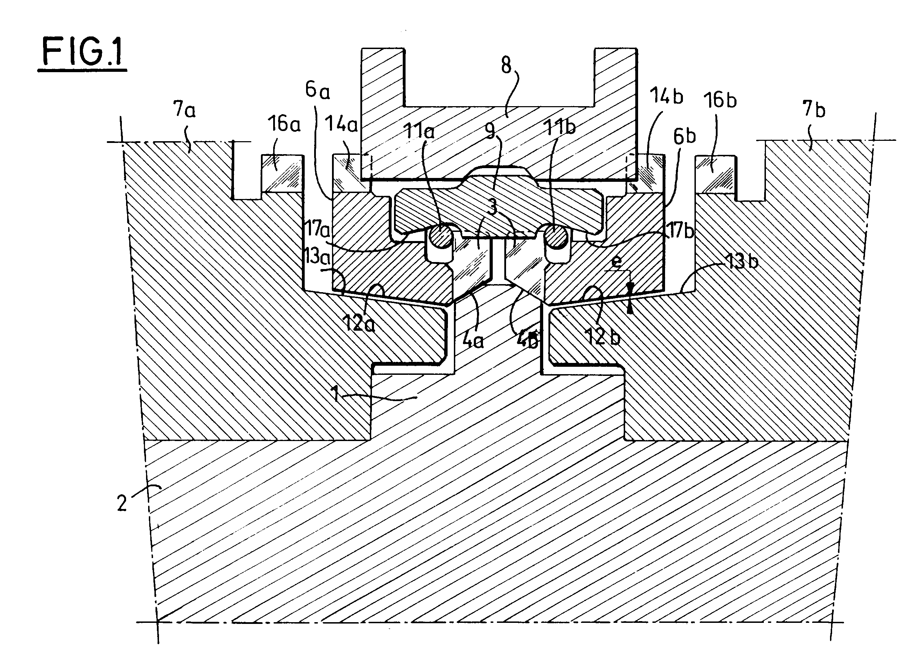

Le dispositif de synchronisation représenté sur la figure 1 comporte un moyeu 1, solidaire d'un arbre rotatif 2, tel que l'arbre secondaire d'une boîte de vitesses mécanique. Le moyeu 1 présente sur sa périphérie deux surfaces d'appui symétriques 4a, 4b inclinées, contre lesquelles reposent deux pattes 3, appartenant à chacun des anneaux de synchronisation 6a, 6b du dispositif. On notera cependant que les pattes 3 apparaissant sur la figure 1 ne sont pas hachurées, car elles ne sont pas situées dans son plan de coupe.

Le dispositif de la figure 1 est un synchroniseur double, muni de deux anneaux de synchronisation 6a, 6b, déplaçables respectivement en direction d'un premier et d'un second pignon de vitesses 7a, 7b, pour engager deux rapports distincts, sous la commande du baladeur 8 sollicité par l'intermédiaire d'une fourchette et d'un mécanisme de commande non représentés, à partir du levier de changement de vitesses du véhicule.

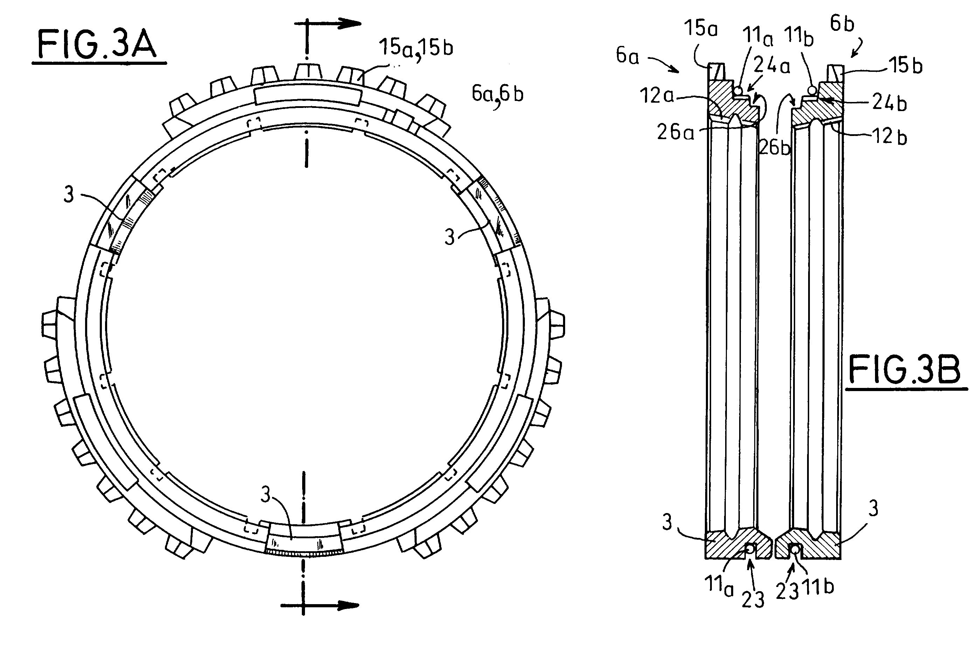

Selon une disposition connue en soi, le baladeur est monté autour du moyeu 1 sur un jeu de barrettes 9, pouvant coulisser sur le moyeu 1 sous la poussée du baladeur 8 de façon à déplacer l'un ou l'autre des anneaux 6a, 6b. Les barrettes 9 sont par ailleurs repoussées radialement vers l'extérieur en direction du baladeur 8 par une paire de joncs élastiques 11a, 11b, disposés entre les anneaux 6a, 6b et les barrettes 9, de façon à engager ces dernières sous le baladeur 8. De façon préférentielle mais non obligatoire, les pattes 3 de chaque anneau 6a, 6b présentent une rainure circulaire 23 (cf fig 3B), permettant d'immobiliser axialement un jonc 11a, 11b, vis à vis de celui-ci.

Lors du passage d'une vitesse, un premier anneau de synchronisation 6a, 6b est déplacé par les barrettes 9, en direction d'un pignon 7a, 7b. Les surfaces de frottement coniques complémentaires 12a, 12b et 13a, 13b, de l'anneau et du pignon sont ainsi appuyées l'une contre l'autre pour égaliser leurs vitesses de rotation de sorte que les dents 14a, 14b du baladeur 8 ne peuvent traverser les dents 15a, 15b de cet anneau, pour s'engager entre les dents 16a, 16b du pignon concerné, avant que l'immobilisation relative de l'anneau et du pignon ne soit effective. Comme indiqué ci-dessus, une première fonction des joncs 11a, 11b est, de façon classique, de repousser radialement les barrettes 9 vers l'extérieur, pour engager celles-ci sous le baladeur 8.

Le dispositif de synchronisation représenté sur la figure 1 est en position de repos, puisque le baladeur 8 et les barrettes 9 sont placées au centre du dispositif, et que les anneaux 6a, 6b sont dégagés des portées coniques 13a, 13b de chaque pignon 7a, 7b.

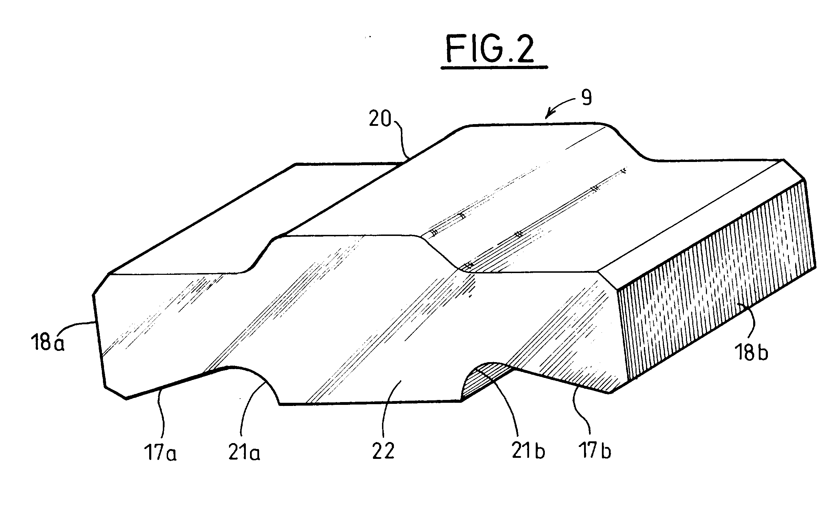

Sur la figure 2, on reconnaît les deux rampes inclinées 17a, 17b symétriques, prévues, conformément à l'invention, sur la face intérieure de chaque barrette 9, qui s'élèvent à partir des extrémités 18a, 18b, de celle-ci, jusqu'à deux zones de raccordement incurvées 21a, 21b, à sa partie médiane 22. Selon une disposition connue en soi, la barrette 9 de la figure 2 présente en outre sur sa face extérieure une protubérance centrale 20, lui permettant de s'engager sous le baladeur 8, sous la poussée radiale des joncs, 11a 11b.

La figure 3A relative à l'anneau de synchronisation 6a, 6b de la figure 1 fait apparaître à la périphérie de celui-ci trois pattes 3 disposées à 120°, dont l'une se retrouve dans la partie inférieure de la figure 3B. Cette patte 3 est traversée par la gorge annulaire 23 mentionnée ci-dessus, permettant de retenir axialement un jonc 11a, 11b, vis à vis de l'anneau 6a, 6b. Dans la partie supérieure de la figure 3B, on remarque que les anneaux 6a, 6b présentent successivement sur leur face extérieure une denture 15a, 15b, un premier épaulement 24a, 24b destiné à recevoir la poussée des clavettes 9, et un second épaulement 26a, 26b supportant le jonc élastique 11a, 11b entre les pattes 3. Enfin, sur la face intérieure de l'anneau 6a, 6b, on reconnait la surface de frottement conique 12a, 12b, apparaissant également sur la figure 1.

Conformément aux figures 3A et 3B, chaque jonc 11a, 11b peut être immobilisé axialement vis-à-vis d'un anneau 6a, 6b au niveau des pattes 3 de celui-ci. Cette disposition n'est cependant pas indispensable, et on peut envisager un certaine mobilité axiale des joncs vis à vis des anneaux, sans sortir du cadre de l'invention. Dans tous les cas, il est cependant nécessaire que les joncs 11a, 11b puissent se déplacer radialement, lorsqu'ils sont comprimés par les barrettes 9. Enfin, comme indiqué plus haut, les pattes 3 ont pour fonction de limiter la course des anneaux 6a, 6b en direction du moyeu 1, en venant buter contre ses surfaces inclinées 4a, 4b.

Les joncs élastiques 11a, 11b coopèrent avec les barrettes 9 de la façon suivante. Lorsque le baladeur 8 se déplace à l'écart de sa position centrale de repos en direction d'un pignon 7a, 7b, il entraîne les barrettes 9 engagées à l'intérieur de celui-ci par les joncs 11a, 11b. Les barrettes 9 déplacent ainsi axialement par l'une de leurs extrémités 18a, 18b un premier anneau 6a, 6b, entouré d'un premier jonc 11a, 11b, à l'écart du moyeu 1.

Simultanément, le second jonc 11a, 11b est comprimé radialement par la rampe inclinée 17a, 17b des barrettes 9, qui se déplacent au-dessus de lui, de sorte que sa réaction élastique orientée perpendiculairement à la surface des rampes 17a, 17b, rappelle automatiquement le second anneau 6a, 6b contre le moyeu 1. La compression radiale du jonc entourant l'anneau de synchronisation qui n'est pas déplacé par le baladeur et les barrettes lors d'un passage de vitesses assure donc automatiquement le rappel élastique de celui-ci en direction du moyeu.

Les anneaux 6a, 6b sont cependant libres en rotation autour des pignons 7a, 7b, lorsqu'ils ne sont pas sollicités par les barrettes 9. Ils disposent même d'un jeu de fonctionnement e (cf figure 1), qui serait suffisant pour leur permettre de battre autour des pignons, s'ils n'étaient pas plaqués contre le moyeu 1, par les joncs élastiques 11a, 11b. Pour éviter tout risque de frottements à l'intérieur du dispositif, l'invention prévoit notamment que ce jeu soit maximal, lorsque les anneaux sont plaqués contre le moyeu 1 par les joncs 11a, 11b.

En conclusion, il faut souligner que l'effort de rappel élastique exercé par les joncs sur les anneaux, grâce à leur réaction sur les rampes, est permanent. Cette disposition permet de supprimer tous les couples de frottement qui peuvent s'opposer au passage des vitesses. Grâce à l'invention, les phénomènes de traînée de boîte, générés par les frottements internes des synchroniseurs connus, peuvent être définitivement éliminés, d'une façon particulièrement simple à mettre en oeuvre.

## Revendications

1. Dispositif de synchronisation comportant un moyeu (1) solidaire d'un arbre rotatif (2) de boîte de vitesses, et un baladeur (8) pouvant coulisser axialement sur le moyeu (1), en vue de déplacer l'un ou l'autre de deux anneaux de synchronisation (6a, 6b) contre un pignon de vitesses (7a, 7b) libre en rotation autour de l'arbre (2), par l'intermédiaire de barrettes (9) repoussées radialement vers le baladeur (8) au moyen d'une paire de joncs élastiques (11a, 11b) entourant les anneaux (6a, 6b), caractérisé en ce que les barrettes (9) présentent sur leur face intérieure deux rampes inclinées symétriques (17a, 17b) orientées de façon telle que le déplacement d'un premier anneau (6a, 6b) par les barrettes (9) en direction d'un pignon (7a, 7b), s'accompagne du rappel axial du second anneau (6a, 6b) en direction du moyeu (1), grâce à la compression radiale du jonc (11a, 11b) disposé autour du second anneau (6a, 6b).

2. Dispositif de synchronisation selon la revendication 1, caractérisé en ce que chaque anneau (6a, 6b) présente à sa périphérie au moins une patte (3) limitant son déplacement en direction du moyeu (1).

3. Dispositif de synchronisation selon la revendication 2, caractérisé en ce que les pattes (3) de chaque anneau (6a, 6b) présentent une gorge circulaire (23) permettant de retenir axialement un jonc élastique (11a, 11b), vis à vis de celui-ci.

4. Dispositif de synchronisation selon la revendication 2 ou 3, caractérisé en ce que le moyeu (1) présente deux surfaces inclinées symétriques (4a, 4b), sur lesquelles les pattes (3) de chaque anneau (6a, 6b) sont plaquées par les joncs (11a, 11b).

5. Dispositif de synchronisation selon l'une des revendications précédentes, caractérisé en ce que les deux rampes inclinées (17a, 17b) de chaque barrette (9) sont raccordées à la partie médiane (22) de celle-ci.

6. Dispositif de synchronisation selon l'une des revendications précédentes, caractérisé en ce que les anneaux (6a, 6b) présentent sur leur face extérieure, une denture d'accouplement (15a, 15b), un premier épaulement (24a, 24b) recevant les clavettes (9) et un second épaulement (26a, 26 b) recevant un jonc élastique (11a, 11b).

7. Dispositif de synchronisation selon l'une des revendications précédentes, caractérisé en ce que les anneaux (6a, 6b) disposent vis-à-vis des pignons (7a, 7b) d'un jeu de fonctionnement, qui est maximal lorsque lesdits anneaux sont plaqués contre le moyeu (1).

8. Dispositif de synchronisation selon l'une des revendications 2 à 7, caractérisé en ce que les anneaux (6a, 6b) présentent trois pattes (3) sur leur circonférence.
